# FASCICULE DE BREVET EUROPEEN

(11) **EP 1 029 663 B1**
(45) Date de publication et mention de la délivrance du brevet: **30.12.2009**
(21) Numéro de dépôt: 00400195.4
(22) Date de dépôt: 26.01.2000
(51) Int. Cl.: B32B 17/10, C03C 27/12, B32B 37/00

(54) **Procédé et dispositif de laminage de vitrages feuilletés**
Verfahren und Vorrichtung zur Herstellung von Verbundglasscheiben
Process and apparatus for laminating layered glazings

(30) Priorité: 27.01.1999 DE 19903171
(43) Date de publication de la demande: 23.08.2000
(73) Titulaire: Saint-Gobain Glass France, 92400 Courbevoie (FR)
(72) Inventeur: Balduin, Michael, 52477 Alsdorf (DE); Havenith, Hubert, 52146 Würselen (DE); Labrot, Michael, 52072 Aachen (DE)
(74) Mandataire: Le Cam, Stéphane Georges Elie

(56) Documents cités:
- EP-A- 0 331 648
- FR-A- 2 128 388
- FR-A- 2 230 599
- US-A- 2 106 766

## Description

La présente invention concerne un procédé et un dispositif de laminage de vitrages feuilletés sous l'action de différences de pression et de chaleur sur les couches superposées pour la formation d'une ébauche. Par vitrages feuilletés, on entend ici des produits multicouche qui sont constitués d'au moins deux vitres solides et d'un film adhésif en matière plastique ou similaire assemblant celles-ci. Les vitres solides peuvent en l'occurrence être en verre ou en matière plastique, une vitre en verre et une vitre en matière plastique pouvant également être assemblées par un film adhésif. De manière connue, les couches individuelles, donc les vitres solides et les couches ou films de matière plastique, sont d'abord confectionnées séparément et ensuite superposées sous la forme d'un paquet de couches - appelé dans la suite ébauche - avant l'assemblage final.

Egalement des vitrages en verre feuilleté modernes, qui sont en particulier utilisés comme pare-brise et de plus en plus comme vitrages latéraux de véhicules automobiles, sont souvent laminés définitivement dans de grands autoclaves sous haute pression et à température accrue. En raison de la montée en pression nécessaire et de la longue durée de séjour, cette étape de procédé freine le déroulement continu et hautement mécanisé de la fabrication, qui est déjà atteint en soi pour la fabrication et la transformation des couches individuelles pour former l'ébauche.

On a cependant également déjà décrit des procédés pour la fabrication de verre feuilleté dans lesquels l'autoclavage pour le collage définitif est supprimé et les ébauches sont collées définitivement à pression atmosphérique.

Le brevet DE 2 209 642 décrit un procédé de fabrication de vitrages en verre feuilleté à trois couches au cours duquel l'ébauche est mise sous vide et chauffée dans son ensemble dans une chambre, les espaces intermédiaires étant simultanément mis sous vide à l'aide d'un cadre d'aspiration. Après avoir atteint une certaine température, par exemple 100°C, la chambre est à nouveau ventilée à pression atmosphérique, la dépression latérale étant cependant maintenue par continuation de la mise sous vide du cadre d'aspiration. De la sorte, le feuilleté est simplement assemblé provisoirement. Ce feuilleté primaire est alors transféré avec le cadre d'aspiration mis sous vide dans une autre chambre, laissée à pression atmosphérique. Dans celle-ci, il est amené par poursuite du chauffage à une température supérieure à la température de fusion du film adhésif placé entre deux vitres. La différence de pression de l'extérieur vers l'intérieur suffit pour l'assemblage définitif.

Un autre procédé sans autoclavage pour la fabrication de produits feuilletés à deux couches avec une plaque thermoplastique située à l'extérieur est décrit dans le brevet DE 3 044 717. Suivant ce procédé, dans une chambre accueillant l'ébauche, la pression ambiante est provisoirement encore plus fortement abaissée que la pression intérieure régnant entre les couches, qui peut également être réduite à l'aide d'un cadre d'aspiration. La différence de pression doit séparer brièvement les couches l'une de l'autre afin de faciliter le dégazage de l'espace intermédiaire. Ensuite, l'ébauche dans son ensemble est chauffée à la température de collage pendant qu'on augmente la pression ambiante, afin de réaliser l'assemblage collé définitif. La pression intérieure reste pendant ce temps en dessous du niveau atmosphérique.

Ces procédés reposent sur des systèmes séparables de mise en dépression. Ils requièrent également un cadre d'aspiration étanchant le paquet de couches sur le bord, non seulement pendant la phase de mise sous vide, mais également durant la phase suivante d'assemblage à pression atmosphérique ou à surpression. Pour chaque forme ou selon le cas, taille de vitrage, on doit disposer d'une variante propre du cadre d'aspiration. Comme le placement et l'enlèvement de celui-ci ne peuvent pas jusqu'à présent être mécanisés, ces procédés ne peuvent pas, ou seulement de manière insuffisante, être incorporés dans une ligne de fabrication au moins quasi continue. On entend ici par quasi continu un déroulement au cours duquel le flux de matière des produits se déroule en principe en continu suivant certaines durées de cycles par vitre et doit uniquement être interrompu pour une courte durée pour certaines étapes de transformation, par exemple pour le pressage entre des membranes ou autres moules de pressage.

Le document DE-B-2 424 085 décrit un procédé également sans autoclavage, au cours duquel un film en matière plastique est laminé sur une vitre à l'aide de membranes de pressage. Pour la mise en oeuvre du procédé, on utilise une chambre dans laquelle la vitre et le film sont d'abord placés sans contact mutuel. Ensuite, on ferme la chambre et on la met sous vide. Le film en matière plastique repose sur une membrane formant la paroi de la chambre, qui est d'abord soumise des deux côtés au vide, c'est-à-dire également sur sa face arrière éloignée de la chambre. Après obtention de la dépression nécessaire dans la chambre, la face arrière de la membrane est soumise à pression atmosphérique. Du fait de la différence de pression qui s'établit, la membrane presse le film en matière plastique autocollant ou pourvu d'une couche adhésive contre la vitre. On peut également réaliser des vitrages en verre feuilleté bombés, qui sont alors pressés de manière analogue entre deux membranes.

Lorsqu'on utilise une colle pouvant être activée thermiquement, la vitre est préchauffée à l'extérieur de la chambre et ensuite placée dans celle-ci. Ce procédé offre avant tout l'avantage de l'absence de cadre d'aspiration ainsi que de moules individuels de pressage.

Enfin, le document DE-C1 19 712 145 décrit un autre procédé de laminage, au cours duquel une ébauche chauffée à température d'assemblage constituée de deux vitres et d'un film adhésif intercalaire est amenée dans une chambre et y est mise sous vide. Les films adhésifs en PVB le plus souvent utilisés pour la fabrication de vitrages en verre feuilleté ont une surface relativement rugueuse, non transparente. On garantit de la sorte que, après l'assemblage des vitres solides et du film adhésif, tout l'air peut être aspiré à travers les canaux formés par les inégalités du film. Afin d'obtenir la transparence élevée exigée du produit final, le film adhésif doit être intégralement fondu, afin que les inégalités disparaissent complètement. Dans le procédé déjà connu, le bord de l'ébauche est étanché après obtention de la pression minimale et ventilation suffisante par pressage mécanique, tandis que la chambre est à nouveau ventilée. Sous l'action de forces exercées sur les surfaces principales du produit feuilleté, de préférence en combinaison avec un chauffage supplémentaire pour fondre complètement le film adhésif, la montée en pression provoque l'assemblage des vitres avec le film adhésif. Grâce à ce procédé, on peut déjà réaliser un flux de matière pratiquement continu.

L'invention a pour but de procurer un autre procédé de laminage de vitrages feuilletés, qui convient au moins pour un flux de matière quasi continu, également dans le cas de contours et tailles variables des vitrages, ainsi qu'un dispositif pour sa mise en oeuvre.

Ce but est atteint conformément à l'invention avec les caractéristiques de la revendication 1 en ce qui concerne le procédé et avec les caractéristiques de la revendication 10 en ce qui concerne le dispositif. Les caractéristiques des revendications dépendantes suivant les revendications indépendantes respectives donnent des perfectionnements avantageux de ces objets.

Le procédé proposé de laminage de vitrages feuilletés par l'action de différences de pression et de chaleur sur les couches superposées du vitrage feuilleté pour former une ébauche comprend les étapes suivantes :
a) l'ébauche est mise sous vide dans l'ensemble par abaissement de la pression ambiante,
b) la dépression ambiante étant maintenue, l'ébauche
b1) est chauffée à une température nécessaire pour assembler le verre avec la matière plastique et
b2) pressée entre des pièces de pressage flexibles pour former le feuilleté,
c) la pression ambiante est augmentée à pression atmosphérique par ventilation du feuilleté.

Lors de l'étape a), la température de l'ébauche n'est pas encore augmentée ou dans tous les cas seulement faiblement. On évite ainsi tout collage prématuré, qui pourrait conduire à des inclusions d'air dans le feuilleté ou dans le produit final et ainsi à des rebuts et une diminution de rendement.

Le maintien de la dépression pendant l'exécution des étapes b1) et b2) permet de renoncer à un cadre d'aspiration sur l'ébauche. Lors de l'étape b1), le film adhésif en poly(butyral de vinyle) (PVB) utilisé pour la plupart des vitrages feuilletés multicouches fond à environ 130°C. En cas d'utilisation d'autres couches de matière plastique, le cas échéant situées à l'extérieur, et d'une colle pouvant être activée par de la chaleur entre la matière plastique et le verre, la colle est chauffée à sa température de fusion, qui peut être inférieure à 130°C.

La durée de cycle du procédé et du dispositif correspondant est essentiellement déterminée par le délai requis pour mettre l'ébauche sous vide lors de l'étape a). Cette période suffit en tout cas pour chauffer l'ébauche à la température requise lors de l'étape b1). Elle donne également suffisamment de temps pour le processus de pressage suivant à l'étape b2), qui peut exiger une immobilisation, au moins de brève durée - durant quelques secondes - du matériau entre les pièces de pressage.

Le refroidissement final rapide du feuilleté à des températures normales qui suit lors de l'ouverture de la fermeture de sortie n'est pas critique pour le verre, parce que les températures d'assemblage sont également nettement plus faibles que les températures habituelles de mise en tension préalable.

De préférence, le feuilleté est réchauffé de manière connue en soi afin d'assembler et de fondre complètement la structure du film.

Dans l'intérêt d'un rendement élevé, les différentes étapes, à savoir l'évacuation, le chauffage, le pressage et la ventilation, sont réalisées dans des chambres successives, physiquement séparées, la chambre de chauffage et la chambre de pressage restant toujours sous vide.

Le niveau de dépression dans la chambre de chauffage et de pressage est d'environ 1 à 10 hPa de pression absolue. La température d'entrée est amenée à environ 50°C par préchauffage de l'ébauche; dans l'installation, on règle alors une vitesse de chauffage d'environ 2°C/s jusqu'à la température d'assemblage habituelle de 130°C. La durée du cycle d'un cycle complet est d'environ 15 s, qui est imposée par les processus d'entrée et de sortie. Le temps de pressage pur est seulement d'environ 5 s.

Même si on tient compte d'un réchauffage du feuilleté pour former le produit final, les temps totaux de fabrication de vitrages feuilletés suivant le procédé de l'invention sont nettement inférieurs aux valeurs d'environ 2,5 heures réalisables avec le procédé d'autoclavage.

Comme pièces de pressage flexibles, on utilise surtout des membranes connues en soi. L'installation ne requiert alors pas de moules de pressage spécifiques d'un type, réglés sur certains modèles de vitrages. Des vitrages feuilletés de contours et tailles différents peuvent être traités directement l'un après l'autre sans modification de l'installation et donc sans temps d'arrêt.

Des ébauches planes peuvent être pressées simplement entre une membrane et une surface d'appui plane et solide, tandis que des ébauches de vitrages bombés sont de préférence pressées de manière connue en soi entre deux membranes pouvant être pressées des deux côtés pour réaliser l'assemblage définitif. On peut naturellement également presser des ébauches planes avec deux membranes dans une chambre de pressage.

En tout cas, les ébauches peuvent pendant le pressage rester sur un transporteur à bande dans la chambre de pressage, dont la bande transmet les forces de pressage ou de réaction à la surface principale du produit feuilleté lui faisant face.

On peut naturellement également utiliser d'autres pièces de pressage telles que par exemple des rouleaux élastiques. Cependant, les membranes de pressage transmettent l'effet de pressage le plus homogène sur l'ensemble de la surface. Celles-ci s'adaptent également le mieux aux surfaces et tailles de vitrages différents. On doit cependant veiller à ce que les ébauches à presser soient toujours entièrement recouvertes par les membranes. La taille des ébauches pouvant être transformées dépend donc directement de la surface de membrane disponible. En tout cas, les pièces de pressage sont au besoin à pourvoir de manière connue en soi d'un revêtement qui empêche de manière sûre une adhérence du verre ou de la matière plastique.

Les membranes de pressage peuvent être soumises à la pression atmosphérique du côté opposé à l'ébauche, parce qu'il règne une dépression à l'intérieur de la chambre de pressage. Cette différence de pression suffit en tout cas pour générer des forces d'assemblage suffisamment élevées. On peut donc renoncer par principe de manière économique à la mise à disposition et à l'utilisation d'un générateur de surpression.

Afin d'empêcher que, lors de la ventilation du feuilleté, de l'air pénètre à nouveau dans le produit feuilleté, on doit chercher en principe à obtenir un collage des bords analogue au procédé évoqué suivant le document DE-C1 19 712 145. En cas d'utilisation de membranes, dont les surfaces utiles dépassent de tous les côtés les bords des ébauches, une force supérieure est exercée sur les arêtes des ébauches lors du pressage, laquelle conduit à un collage suffisant des bords, d'autant plus que le film adhésif atteint justement sa température de fusion plutôt sur les bords qu'au milieu de la surface. La dépression établie est de la sorte emprisonnée dans le feuilleté.

Les inventeurs ont également su mettre en évidence qu'une couche adhésive plus particulièrement adaptée au procédé et autorisant une meilleure évacuation de l'air possède une rugosité plus importante qu'une couche adhésive traditionnelle et notamment une rugosité moyennée Rz comprise entre 80 et 140 µm. Cette rugosité Rz est de préférence comprise entre 85 et 130 µm et de préférence encore entre 100 et 110 µm.

Une couche adhésive particulièrement favorable est une feuille de PVB (polyvinylbutyral) présentant les caractéristiques définies ci-après, mesurées selon la norme DIN 4768.

Les mesures sont faites dans le tableau 1 dans la direction du matériau (direction d'extrusion) et dans le tableau 2 selon une direction perpendiculaire, à chaque fois sur chacune des faces.

**TABLEAU 1**

| | FACE 1 | FACE 2 |
|---|---|---|
| Ra/µm | 18,46 | 16,01 |
| Rz/µm | 112,42 | 96,86 |
| Rmx/µm | 134,32 | 108,75 |
| RSm/µm | 948,05 | 675,12 |

**TABLEAU 2**

| | FACE 1 | FACE 2 |
|---|---|---|
| Ra/µm | 18,36 | 17,51 |
| Rz/µm | 111,09 | 102,86 |
| Rmx/µm | 132,99 | 115,25 |
| RSm/µm | 1560,51 | 1112,86 |

De telles feuilles de PVB qui possèdent une rugosité plus importante que les feuilles habituellement utilisées sont obtenues par extrusion et subissent un traitement thermique, tel qu'un refroidissement, et/ou mécanique, par exemple un laminage par des rouleaux gravés qui conduisent à ladite rugosité.

D'autres détails et avantages de l'objet de l'invention découlent des dessins de deux exemples de réalisation et de leur description donnée dans la suite.

Les dessins montrent en représentation simplifiée :
- à la figure 1, une vue en coupe transversale d'ensemble d'un dispositif de fabrication sans autoclavage de vitrages feuilletés plans ;
- à la figure 2, une vue détaillée d'une chambre de pressage de ce dispositif avec une membrane comme pièce de pressage dans une position de travail ;
- à la figure 3, une forme de réalisation dérivée d'une chambre de pressage suivant la figure 2 pour la fabrication de produits feuilletés bombés avec deux membranes en position de repos, et
- à la figure 4, la chambre de pressage suivant la figure 3 en position de travail.

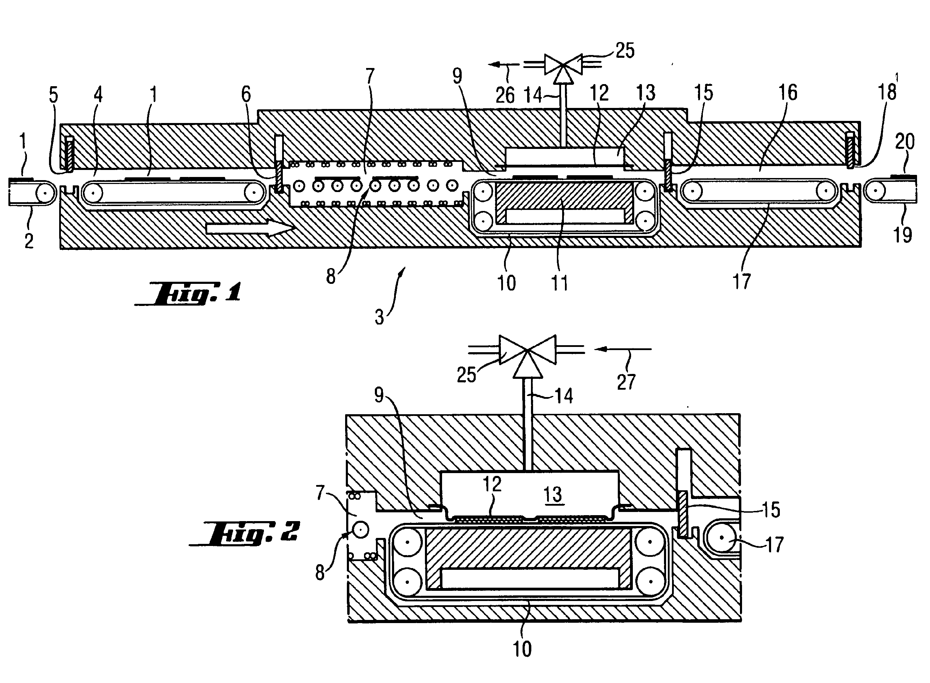

Suivant la figure 1, des ébauches 1 constituées de vitres et films intercalaires assemblés au préalable sont amenés sur un convoyeur 2 à un dispositif d'assemblage 3. Celui-ci est parcouru de la gauche vers la droite dans la représentation. Les ébauches sont d'abord transmises à un sas d'entrée 4 servant de station d'entrée, dans lequel elles reposent également sur un convoyeur. Le sas d'entrée 4 peut être fermé hermétiquement du côté de l'entrée - à gauche - par une fermeture 5 et du côté de la sortie par une fermeture 6 et peut être mis sous vide et ensuite ventilé à l'aide d'un système de tuyauteries non représenté. Les fermetures sont motorisées tout comme les convoyeurs et sont coordonnées par une commande centrale. La fermeture 6 rend étanche le sas d'entrée d'une chambre de chauffage 7 située en aval comportant des éléments chauffants (par rayonnement) électriques, qui, durant le fonctionnement de l'installation, reste toujours mise sous vide à un niveau de dépression prédéfini. A l'intérieur de la chambre de chauffage 7, les ébauches sont de préférence transportées sur de tels convoyeurs qui garantissent une action efficace du chauffage par rayonnement sur tous les côtés, en cas de besoin également par convection. Il peut s'agir par exemple de transporteurs à bande à plusieurs bandes étroites. Les ébauches sont ici déplacées sur des rouleaux 8 d'un convoyeur à rouleaux à travers la chambre de chauffage 7. Cette dernière est suivie d'une chambre de pressage 9, qui reste également toujours sous vide durant le fonctionnement de l'installation. La dépression dans la chambre de chauffage et dans la chambre de pressage sera toujours la même, de sorte qu'une séparation en pression ou un découplage de ces deux chambres n'est pas nécessaire. La température peut également être la même dans les deux chambres, le cas échéant, un chauffage, par exemple avec une soufflerie à air chaud, est également prévu dans la chambre de pressage. Naturellement, en cas de besoin, on peut également prévoir une fermeture pouvant être commandée à distance entre ces chambres 7 et 9.

Dans la chambre de pressage, les ébauches avancent sur un transporteur à bande 10. Celui-ci est guidé sur une surface d'appui 11, qui sert dans cette réalisation de pièce de pressage inférieure passive pour les ébauches planes. Au-dessus du transporteur à bande 10 se trouve au plafond de la chambre de pressage 9 une membrane 12, qui constitue une pièce de pressage supérieure active. Au-dessus de la membrane 12 et hermétiquement isolée par celle-ci de la chambre de pressage se trouve une chambre de travail 13. Via un système de tuyauteries pneumatiques 14 et des vannes appropriées, celle-ci peut être mise alternativement sous dépression et à pression atmosphérique ou, en cas de besoin, sous surpression. Le vide disponible dans la chambre de travail 13 doit être légèrement plus élevé que la dépression régnant dans la chambre de pressage 9, afin que la membrane 12 puisse être soulevée de manière fiable au plafond de chambre après chaque mise sous pression
ou ventilation. La force de décollement ou selon le cas de soulèvement peut également être produite par l'élasticité propre de la membrane ou par des accumulateurs d'énergie ou des ressorts appropriés.

Du côté de la sortie, à droite donc, la chambre de pressage 9, peut également être isolée hermétiquement par une fermeture 15 d'un sas de sortie 16 situé en aval. Dans ce dernier, un convoyeur 17 est également prévu pour le transport des produits; à sa sortie, il peut être isolé de l'environnement par une fermeture 18. Un autre convoyeur 19 transporte de manière connue en soi les feuilletés 20 terminés à travers un four de passage continu non représenté, dans lequel les feuilletés sont entreposés pendant une période prolongée (environ 1 heure ou moins) à une température ambiante d'environ 130°C.

A l'arrivée des ébauches 1 sur le convoyeur 2 dans le sas d'entrée 4, la fermeture de gauche 5 de celui-ci est ouverte et sa fermeture de droite 6 est fermée. Après introduction complète d'une charge, la fermeture de gauche est également fermée. Le sas d'entrée est maintenant mis sous vide au niveau de dépression de la chambre de chauffage 7. Lorsque celui-ci est atteint, la fermeture 6 est ouverte. Afin de délester la commande de la fermeture, on peut établir avant l'ouverture une compensation directe de pression par l'intermédiaire d'une tuyauterie de dérivation commutable. Les ébauches sont transférées dans la chambre de chauffage 7. Ensuite, la fermeture 6 est à nouveau fermée. Le sas d'entrée peut maintenant être ventilé et ensuite - après ouverture de la fermeture 5 - accepter la charge d'ébauches suivante. Il va de soi que, durant le fonctionnement du dispositif d'assemblage 3, les deux fermetures 5 et 6 ne sont jamais ouvertes simultanément.

Les ébauches se trouvant dans la chambre de chauffage 7 sont chauffées jusqu'à ce que la température de fusion du film adhésif ou, selon le cas, de la colle utilisée soit à peu près atteinte. Si la chambre de chauffage est suffisamment longue, les ébauches peuvent déjà être transportées plus loin par le convoyeur à rouleaux 8 pendant le chauffage. Elles sont alors transférées sur le transporteur à bande 10 de la chambre de pressage 9 sans modification du niveau de pression ni de la température. En cas de besoin, elles sont amenées à l'aide d'un système de positionnement non représenté dans la position correcte sur la surface d'appui 11 et en dessous de la membrane 12. La fermeture de sortie 15 de la chambre de pressage est maintenant fermée, tout comme la fermeture 6. Dans la chambre de travail 13 au-dessus de la membrane 12 règne encore une dépression. Le transporteur à bande 10 s'arrête. On augmente maintenant rapidement la pression dans la chambre de travail 13. La différence de pression qui s'établit presse la membrane 12 sur toute sa surface sur les faces supérieures des ébauches chauffées, comme cela est représenté à la Figure 2, et presse ces dernières sur la surface d'appui 11 par l'intermédiaire de la bande du transporteur à bande 10. La pression exercée suffit pour lier solidement ensemble les couches des ébauches et en particulier pour exercer une pression accrue sur les bords des ébauches. Après le temps de pressage prescrit de quelques secondes, la chambre de travail 13 est à nouveau mise sous vide afin de lever à nouveau la membrane 12 au plafond de la chambre de pressage et de libérer les feuilletés pressés. Avant d'ouvrir la fermeture 15 pour extraire les feuilletés dans le sas de sortie 16, la fermeture de sortie 18 de celui-ci doit être fermée et le sas lui-même doit être mis sous vide au niveau de dépression de la chambre de pressage 9, le cas échéant de nouveau à l'aide d'une tuyauterie de dérivation commutable. Les produits feuilletés sont maintenant transférés par le transporteur à bande 10 sur le convoyeur 17 dans le sas de sortie 16. Lorsque le transfert est terminé, la fermeture 15 est à nouveau fermée et le sas de sortie 16 est ventilé à niveau atmosphérique.

Si la chambre de chauffage et la chambre de pressage sont mises sous vide par l'intermédiaire des systèmes de mise sous vide des sas, on fermera naturellement pendant le fonctionnement de l'installation les fermetures intérieures 6 et 15 uniquement pendant le temps où le niveau de pression dans les deux sas est supérieur à la pression de travail dans les chambres de chauffage et de pressage, donc pendant l'introduction et la sortie respectivement de charges d'ébauches ou, selon le cas, de feuilletés. La capacité de traitement de l'installation peut être comparativement améliorée si on prévoit également dans les zones de chauffage et de pressage des moyens propres de maintien de la dépression.

Afin de garantir des temps de cycle uniformes, on dimensionnera de la même manière les capacités de chargement des différentes stations, c'est-à-dire que les sas d'entrée et de sortie ainsi que la chambre de pressage pourront accepter chacun des charges équivalentes d'ébauches
ou, selon le cas, de feuilletés. La chambre de chauffage ou, selon le cas, le convoyeur à rouleaux qui y est prévu peut par contre en principe - moyennant une longueur suffisante ou, selon le cas, une faible vitesse de transport - fonctionner en continu. Afin de réduire la longueur de la chambre de chauffage, on pourrait déjà équiper le sas d'entrée d'éléments chauffants.

En cas de besoin, on prendra des mesures particulières pour éliminer les débris éventuels de verre brisé de la surface de la bande du transporteur à bande 10 et de la face inférieure de la membrane 12. Celles-ci peuvent par exemple être brossées dans la zone du brin inférieur de la bande.

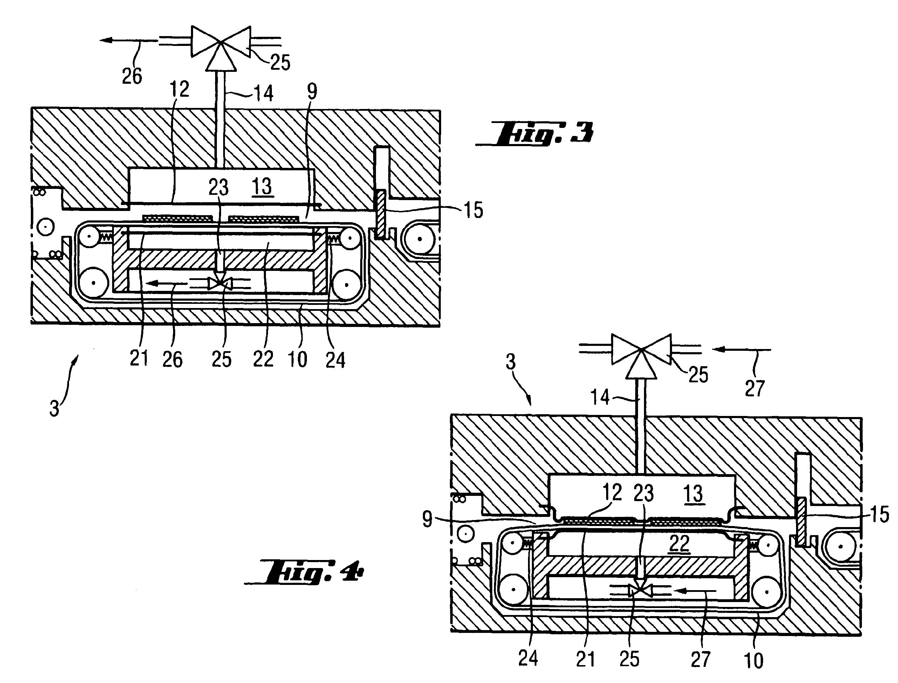

Dans la variante de réalisation montrée à la figure 3 d'une chambre de pressage 9, comme différence principale par rapport à la réalisation expliquée ci-dessus, une deuxième membrane 21 est prévue comme pièce de pressage inférieure active et complément à la membrane 12. La deuxième membrane 21 est située en dessous du transporteur à bande 10 et remplace la surface d'appui 11. Pour actionner celle-ci, une deuxième chambre de travail 22 est prévue, laquelle, comme la chambre de travail 13, peut être mise alternativement sous dépression et à pression atmosphérique ou sous surpression par l'intermédiaire d'un système de tuyauteries 23, et peut être isolée hermétiquement par la membrane 21 de la chambre de pressage. La commande de pression des deux chambres de travail 13 et 22 se déroulera en règle générale de manière synchrone; celles-ci peuvent cependant également être commandées indépendamment l'une de l'autre suivant un déroulement prédéfini dans le temps.

Normalement, donc en position de repos des pièces de pressage, les deux chambres de travail 13 et 22 sont mises sous vide. Dans cet état, le transporteur à bande 10 est librement accessible pour le transport des produits pressés ou à presser. De préférence, la membrane 21 ne repose alors pas sur sa face inférieure afin de minimiser le frottement et l'usure. Il n'existe pas non plus de contact de glissement entre la membrane supérieure 12 et les produits feuilletés.

Après le positionnement d'ébauches chauffées, qui, dans ce cas, peuvent également être légèrement bombées - par exemple des vitrages latéraux de véhicules à courbure cylindrique en verre feuilleté de sécurité, entre les deux membranes 12 et 21, les deux chambres de travail 13 et 22 sont ventilées. La situation esquissée à la figure 4 s'établit alors : les membranes enserrent les ébauches entre elles et produisent ainsi à nouveau une force de pressage surfacique sur leurs deux côtés et sur leurs bords. Il va de soi que, dans cette réalisation, le transporteur à bande 10 ne peut opposer qu'une résistance la plus faible possible à un épousement à pleine surface à la surface de vitrage qui lui fait face, le cas échéant bombée. Ici, un dispositif de tension 24 est en particulier esquissé sur un des rouleaux de renvoi, lequel permet à la bande transporteuse sous tension préalable de s'écarter élastiquement lors du soulèvement par la membrane inférieure 21. Les membranes 12 et 21 doivent également être elles-mêmes suffisamment souples afin d'épouser la forme à pleine surface.

On obtient ainsi de manière analogue à la figure 2 qu'une charge de pressage surfacique est appliquée sur les ébauches chauffées et mises sous vide. Celle-ci est maintenue pendant un temps suffisant, afin que le collage recherché à pleine surface des couches individuelles du feuilleté soit atteint. La souplesse des membranes est utilisée pour obtenir une force de pressage augmentée sur les bords des ébauches et réaliser ainsi en particulier un collage sûr du bord extérieur du feuilleté. Ceci empêche à nouveau une entrée d'air entre les couches du feuilleté lorsque celui-ci est ultérieurement à nouveau ventilé à pression atmosphérique.

Il va de soi que, dans cette configuration, la commande des membranes par l'évolution de la pression dans les chambres de travail exige une plus grande attention que lors du pressage de produits plans sur une surface d'appui solide.

## Revendications

1. Procédé de laminage de vitrages feuilletés comportant au moins deux vitres solides et un film adhésif par l'action de différences de pression et de chaleur sur les couches superposées du vitrage feuilleté pour former une ébauche, comportant les étapes suivantes :
a) l'ébauche est mise sous vide dans l'ensemble par abaissement de la pression ambiante,
b) la dépression ambiante étant maintenue, l'ébauche
b1) est chauffée à une température nécessaire pour assembler adhésivement le verre avec le film adhésif et
b2) pressée à cette température au moyen de pièces de pressage flexibles pour former le feuilleté,
c) la pression ambiante est augmentée à pression atmosphérique par ventilation du feuilleté.

2. Procédé suivant la revendication 1, **caractérisé en ce que**, après l'étape c), le feuilleté est davantage chauffé afin d'obtenir une fusion intégrale du film adhésif.

3. Procédé suivant la revendication 1 ou 2, **caractérisé en ce que** les étapes a), b1), b2) et c) sont chacune réalisées dans des chambres successives, physiquement séparées, les étapes b1) et b2) se déroulant dans des chambres mises en permanence sous vide.

4. Procédé suivant l'une des revendications précédentes, **caractérisé en ce que**, pour chauffer l'ébauche suivant l'étape b1), on utilise un four de passage continu avec des éléments de chauffage par rayonnement.

5. Procédé suivant l'une des revendications précédentes, **caractérisé en ce que**, lors de l'étape b2), des forces de pressage sont appliquées par au moins une membrane mobile sur une des surfaces principales.

6. Procédé suivant l'une des revendications précédentes, **caractérisé en ce que** les ébauches sont pressées couchées sur un transporteur à bande dont la bande transmet des forces de pressage ou de réaction à la surface principale qui lui fait face.

7. Procédé suivant la revendication 5 ou 6, **caractérisé en ce que** des ébauches planes s'appuient par leur surface principale éloignée de la membrane sur une surface d'appui plane solide.

8. Procédé suivant la revendication 5 ou 6, **caractérisé en ce que**, en particulier sur les ébauches comportant au moins une vitre solide bombée, les forces de pressage sont appliquées à l'aide de membranes mobiles agissant sur les deux surfaces principales.

9. Procédé suivant l'une des revendications 5 à 8, **caractérisé en ce que**, pour le pressage, chaque membrane est soumise au moins à pression atmosphérique sur sa face éloignée de l'ébauche.

10. Procédé suivant l'une des revendications précédentes, **caractérisé en ce que** le film adhésif présente une rugosité moyenne Rz comprise entre 80 et 140 µm et de préférence entre 100 et 110 µm.

11. Dispositif de laminage de vitrages feuilletés composés d'au moins deux vitres solides et d'un film adhésif sous l'action de différences de pression et de chaleur sur les couches superposées du vitrage feuilleté pour former une ébauche (1), en particulier pour réaliser le procédé suivant la revendication 1, comprenant :
- un sas d'entrée (4) pour abaisser la pression ambiante après l'introduction d'au moins une ébauche (1),
- une chambre de chauffage (7) pouvant être mise sous vide pour chauffer les ébauches introduites à une température d'assemblage après la mise sous vide,
- une chambre de pressage (9) pouvant être mise sous vide, comportant des pièces de pressage (11; 12, 21) pour appliquer sur les surfaces principales des ébauches (1) introduites après le chauffage une pression suffisante pour l'assemblage définitif des vitrages feuilletés,
- un sas de sortie (16) pour ventiler à pression atmosphérique les vitrages feuilletés pressés introduits,
- des fermetures (6; 15) pour séparer le sas d'entrée (4) et le sas de sortie (16) des chambres de chauffage et de pressage,
- des dispositifs de transport (2, 8, 10, 17) pour le flux de matière à travers les chambres successives.-

12. Dispositif suivant la revendication 11, **caractérisé en ce que** la chambre de chauffage (7) est réalisée comme four de passage continu avec un convoyeur et des éléments de chauffage par rayonnement.

13. Dispositif suivant l'une des revendications de dispositif précédentes, **caractérisé en ce que** le sas d'entrée (4) peut être chauffé.

14. Dispositif suivant l'une des revendications de dispositif précédentes, **caractérisé en ce qu'**au moins le dispositif de transport dans la chambre de pressage (9) est construit comme transporteur à bande (10), sur la bande duquel les ébauches reposent pendant le processus de pressage.

15. Dispositif suivant l'une des revendications de dispositif précédentes, **caractérisé en ce qu'**au moins une pièce de pressage prévue dans la chambre de pressage (9) est réalisée sous la forme d'une membrane (12; 21) et **en ce qu'**une chambre de travail (13; 22) correspondant à la membrane (12; 21) peut être soumise à des niveaux de pression variables par l'intermédiaire d'un système de tuyauteries (14; 23) pour actionner la membrane (12; 21).

16. Dispositif suivant les revendications 14 et 15, **caractérisé en ce qu'**une membrane (21) est disposée en dessous du transporteur à bande (10).

17. Dispositif suivant la revendication 15 ou 16, **caractérisé en ce que**, pour le pressage, une surface solide (11) sert de pendant à une pièce de pressage réalisée sous la forme d'une membrane (12).

18. Dispositif suivant la revendication 15 ou 16, **caractérisé en ce que** deux membranes (12; 21) opposées et pouvant être actionnées à contresens sont prévues pour le pressage des ébauches positionnées (1).

19. Dispositif suivant la revendication 14, **caractérisé en ce qu'**au transporteur à bande (10) prévu dans la chambre de pressage (9) correspond un dispositif de tension (24) permettant un écartement élastique de la bande sous tension préalable pendant le pressage.

20. Dispositif suivant la revendication 14 ou 15, **caractérisé en ce que** des moyens sont prévus pour enlever les déchets de bris de verre de la surface du transporteur à bande (10).

## Claims

1. Process for the lamination of laminated glazing assemblies, comprising at least two solid panes and an adhesive layer, by the effect of pressure and heat differences on the superposed layers of the laminated glazing assembly, in order to form a preform, comprising the following steps:
a) the preform is subjected to an overall vacuum by lowering the ambient pressure;
b) with the ambient vacuum being maintained, the preform
b1) is heated to a temperature necessary for joining the glass to the adhesive layer in an adhesive manner and
b2) pressed at this temperature by means of flexible pressing pieces in order to form the laminate,
c) the ambient pressure is increased to atmospheric pressure by venting the laminate.

2. Process according to Claim 1, **characterized in that**, after step c) the laminate is heated further so as to fully melt the adhesive layer.

3. Process according to Claim 1 or 2,
**characterized in that**, steps a), b1), b2) and c) are each carried out in physically separate successive chambers, steps b1) and b2) taking place in chambers permanently under vacuum.

4. Process according to one of the preceding claims, **characterized in that**, a tunnel oven with radiative heating elements is used for heating the preform in step b1).

5. Process according to one of the preceding claims, **characterized in that**, in step b2), pressing forces are applied by at least one movable membrane against one of the main surfaces.

6. Process according to one of the preceding claims, **characterized in that**, the preforms are pressed flat against a conveyor belt the belt of which transfers pressing or reaction forces to the main surface which faces it.

7. Process according to Claim 5 or 6, **characterized in that**, flat preforms bear via their main surface away from the membrane on a solid flat bearing surface.

8. Process according to Claim 5 or 6, **characterized in that**, particularly in the case of preforms having at least one curved solid pane, the pressing forces are applied using movable membranes acting on the two main surfaces.

9. Process according to one of Claims 5 to 8, **characterized in that**, for the pressing operation, each membrane is subjected to at least atmospheric pressure on its face away from the preform.

10. Process according to one of the preceding process claims, **characterized in that** the adhesive layer has an averaged roughness Rz between 80 and 140 µm and preferably between 100 and 110 µm.

11. Apparatus for the lamination of laminated glazing assemblies composed of at least two solid panes and of an adhesive layer under the effect of pressure and heat differences on the superposed layers of the laminated glazing assembly, in order to form a preform (1), in particular for carrying out the process according to Claim 1, comprising:
- an inlet lock (4) for lowering the ambient pressure after at least one preform (1) has been introduced;
- a heating chamber (7), in which a vacuum can be created, for heating the preforms introduced to an assembly temperature after the vacuum has been created;
- a pressing chamber (9), in which a vacuum can be created, comprising pressing pieces (11; 12, 21) for applying a sufficient pressure to the main surfaces of the preforms (1), introduced after the heating step, in order for the laminated glazing assemblies to be finally assembled;
- an outlet lock (16) for venting to atmospheric pressure the pressed laminated glazing assemblies introduced;
- shutters (6; 15) for separating the inlet lock (4) and the outlet lock (16) from the heating and pressing chambers;
- transportation devices (2, 8, 10, 17) for the flow of material through the successive chambers.

12. Apparatus according to Claim 11, **characterized in that**, the heating chamber (7) is made as a tunnel oven with a conveyor and radiative heating elements.

13. Apparatus according to one of the preceding apparatus claims, **characterized in that**, the inlet lock (4) may be heated.

14. Apparatus according to one of the preceding apparatus claims, **characterized in that**, at least the transportation device in the pressing chamber (9) is constructed as a conveyor belt (10) on the belt of which the preforms rest during the pressing process.

15. Apparatus according to one of the preceding apparatus claims, **characterized in that**, at least one pressing piece provided in the pressing chamber (9) is made in the form of a membrane (12; 21) and **in that** a working chamber (13; 22) corresponding to the membrane (12; 21) may be subjected to variable pressure levels by means of a system of pipes (14; 23) in order to actuate the membrane (12; 21).

16. Apparatus according to Claims 14 and 15,
**characterized in that**, a membrane (21) is placed beneath the conveyor belt (10).

17. Apparatus according to Claim 15 or 16,
**characterized in that**, for the pressing operation, a solid surface (11) serves as counterpart to a pressing piece made in the form of a membrane (12).

18. Apparatus according to Claim 15 or 16,
**characterized in that**, two opposed membranes (12; 21) which can be actuated in opposite directions are provided for pressing the positioned preforms (1).

19. Apparatus according to Claim 13, **characterized in that**, a tensioning device (24) corresponds to the conveyor belt (10) provided in the pressing chamber (9), the said device allowing the pretensioned belt to be elastically moved away during the pressing operation.

20. Apparatus according to Claim 13 or 14, **characterized in that,** means are provided for removing broken-glass debris from the surface of the conveyor belt (10).

## Patentansprüche

1. Verfahren zur Laminierung von Verbundgläsern, die zumindest zwei feste Gläser und eine Klebefolie umfassen, um über die Wirkung von Druck- und Wärmeunterschieden auf den übereinander lagernden Schichten des Verbundglases einen Rohling zu bilden, das die folgenden Schritte umfasst:
a) der Rohling wird insgesamt durch Absenkung des Umgebungsdrucks unter Vakuum gesetzt,
b) während der Umgebungsunterdruck aufrecht erhalten wird, wird der Rohling
b1) auf eine Temperatur erhitzt, die notwendig ist, um das Glas mit der Klebefolie klebend zusammenzufügen und
b2) bei dieser Temperatur mittels flexibler Presselemente gepresst, um den Verbund zu bilden,
c) der Umgebungsdruck wird durch eine Belüftung des Verbunds auf den atmosphärischen Druck erhöht.

2. Verfahren gemäß Anspruch 1, **dadurch gekennzeichnet, dass** der Verbund nach dem Schritt c) weiter erhitzt wird, um eine vollständige Verschmelzung der Klebefolie zu erhalten.

3. Verfahren gemäß Anspruch 1 oder 2, **dadurch gekennzeichnet, dass** die Schritte a), b1), b2) und c) alle körperlich getrennt in nachfolgenden Kammern realisiert werden und die Schritte b1) und b2) in Kammern mit dauerhaftem Vakuum ablaufen.

4. Verfahren gemäß einem der vorherigen Ansprüche, **dadurch gekennzeichnet, dass** ein kontinuierlicher Durchgangsofen mit Strahlungsheizelementen verwendet wird, um den Rohling gemäß dem Schritt b1) zu erhitzen.

5. Verfahren gemäß einem der vorhergehenden Ansprüche, **dadurch gekennzeichnet, dass** während des Schritts b2) durch zumindest eine bewegliche Membran Druckkräfte auf eine der Hauptflächen angewendet werden.

6. Verfahren gemäß einem der vorhergehenden Ansprüche, **dadurch gekennzeichnet, dass** die Rohlinge auf einem Förderband liegend gepresst werden, dessen Band Press- oder Reaktionskräfte auf die ihm gegenüberliegende Hauptfläche überträgt.

7. Verfahren gemäß Anspruch 5 oder 6, **dadurch gekennzeichnet, dass** flache Rohlinge sich über ihre von der Membran abgekehrte Hauptfläche auf eine flache, feste Stützfläche stützen.

8. Verfahren gemäß Anspruch 5 oder 6, **dadurch gekennzeichnet, dass** insbesondere auf den Rohlingen, die zumindest ein festes gebogenes Glas aufweisen, die Druckkräfte mit Hilfe von beweglichen Membranen aufgewendet werden, die auf die beiden Hauptflächen wirken.

9. Verfahren gemäß einem der Ansprüche 5 bis 8, **dadurch gekennzeichnet, dass** jede Membran für das Pressen auf ihrer dem Rohling abgekehrten Seite zumindest atmosphärischem Druck unterworfen wird.

10. Verfahren gemäß einem der vorhergehenden Ansprüche, **dadurch gekennzeichnet, dass** die Klebefolie eine mittlere Rauhigkeit Rz zwischen 80 und 140 µm und vorzugsweise zwischen 100 und 110 µm aufweist.

11. Vorrichtung zur Laminierung von Verbundgläsern, die zumindest aus zwei festen Scheiben und einer Klebefolie bestehen, um unter der Wirkung von Druck- und Wärmeunterschieden auf den übereinander lagernden Schichten des Verbundglases, einen Rohling (1) zu bilden, insbesondere um das Verfahren gemäß Anspruch 1 auszuführen, umfassend:
- eine Eingangsschleusenkammer (4) um den Umgebungsdruck nach der Einführung zumindest eines Rohlings (1) abzusenken,
- eine Heizungskammer (7), welche unter Vakuum gesetzt werden kann, um die eingeführten Rohlinge bei einer Zusammenfügetemperatur nach der Vakuumierung zu erhitzen,
- eine Pressungskammer (9), welche unter Vakuum gesetzt werden kann und welche Presselemente (11; 12, 21) umfasst, um auf die Hauptflächen der eingeführten Rohlinge (1) nach der Erhitzung einen genügenden Druck für die endgültige Zusammenfügung der Verbundgläser anzuwenden,
- eine Ausgangsschleusenkammer (16), um die eingeführten gepressten Verbundgläser auf atmosphärischen Druck zu belüften,
- Sperren (6; 15) um die Eingangsschleusenkammer (4) und die Ausgangsschleusenkammer (16) von den Heizungs- und Pressungskammern zu trennen,
- Transportvorrichtungen (2, 8, 10, 17) für den Warenfluss durch die aufeinander folgenden Kammern.

12. Vorrichtung gemäß Anspruch 11, **dadurch gekennzeichnet, dass** die Heizungskammer (7) als ein kontinuierlicher Durchgangsofen mit einem Förderer und Strahlungsheizelementen ausgebildet ist.

13. Vorrichtung gemäß einem der vorhergehenden Vorrichtungsansprüche, **dadurch gekennzeichnet, dass** die Eingangsschleusenkammer (4) geheizt werden kann.

14. Vorrichtung gemäß einem der vorhergehenden Vorrichtungsansprüche, **dadurch gekennzeichnet, dass** zumindest die Transportvorrichtung in der Pressungskammer (9) als ein Förderband (10) ausgebildet ist, auf dessen Band die Rohlinge während des Pressungsvorgangs liegen.

15. Vorrichtung gemäß einem der vorhergehenden Vorrichtungsansprüche, **dadurch gekennzeichnet, dass** zumindest ein Presselement, welches in der Pressungskammer (9) vorgesehen ist, als eine Membran (12; 21) ausgebildet ist und dadurch, dass eine Arbeitskammer (13; 22), welche zu der Membran (12; 21) gehört, durch die Vermittlung eines Rohrleitungssystems (14; 23) zum Antrieb der Membran (12; 21) in variable Druckniveaus gebracht werden kann.

16. Vorrichtung gemäß den Ansprüchen 14 und 15, **dadurch gekennzeichnet, dass** eine Membran (21) unterhalb des Förderbands (10) angeordnet ist.

17. Vorrichtung gemäß Anspruch 15 oder 16, **dadurch gekennzeichnet, dass** für die Pressung eine feste Fläche (11) als Gegenstück zu einem Presselement, welches in der Form einer Membran (12) ausgebildet ist, dient.

18. Vorrichtung gemäß Anspruch 15 oder 16, **dadurch gekennzeichnet, dass** zwei einander gegenüberliegende Membranen (12; 21), die gegensinnig gesteuert werden können, vorgesehen sind, um die positionierten Rohlinge (1) zu pressen.

19. Vorrichtung gemäß Anspruch 14, **dadurch gekennzeichnet, dass** zu dem Förderband (10), das in der Pressungskammer (9) vorgesehen ist, eine Spannvorrichtung (24) gehört, die eine elastische Weiterung des Bandes unter vorherigem Druck während des Pressens erlaubt.

20. Vorrichtung gemäß Anspruch 14 oder 15, **dadurch gekennzeichnet, dass** Mittel vorgesehen sind, um die Abfälle von Glasscherben von der Oberfläche des Förderbandes (10) zu entfernen.
